# EUROPÄISCHE PATENTSCHRIFT

(11) **EP 2 148 796 B1**
(45) Veröffentlichungstag und Bekanntmachung des Hinweises auf die Patenterteilung: **14.03.2012**
(21) Anmeldenummer: 08736510.2
(22) Anmeldetag: 23.04.2008
(51) Int. Cl.: B60Q 1/14, B60R 25/04

(54) **LENKSÄULENMODUL**
STEERING COLUMN MODULE
MODULE COLONNE DE DIRECTION

(30) Priorität: 25.04.2007 DE 102007019493
(43) Veröffentlichungstag der Anmeldung: 03.02.2010
(73) Patentinhaber: Leopold Kostal GmbH & Co. KG, 58513 Lüdenscheid (DE)
(72) Erfinder: HIRSCHFELD, Klaus, 58515 Lüdenscheid (DE); FIALA, Lukas, 58511 Lüdenscheid (DE); LANGS, Michael, 58511 Lüdenscheid (DE); WESSENDORF, Benno, 58515 Lüdenscheid (DE)
(74) Vertreter: Kerkmann, Detlef
(86) Internationale Anmeldenummer: PCT/EP2008/054939
(87) Internationale Veröffentlichungsnummer: WO 2008/132116

(56) Entgegenhaltungen:
- EP-A- 1 060 946
- DE-A1- 19 842 225
- DE-C1- 19 707 067
- US-A- 5 747 763

## Beschreibung

Die Erfindung betrifft ein Lenksäulenmodul für ein Kraftfahrzeug, bestehend aus miteinander verbundenen Funktionsmodulen, zu denen zumindest ein Lenkstockschaltermodul und ein Lenkanlassschlossmodul gehören, wobei das Lenksäulenmodul über das Lenkanlassschlossmodul am Mantelrohr der Lenksäule befestigbar ist.

Ein derartiges Lenksäulenmodul ist aus der EP 1 060 946 B1 bekannt. Bei dem in diesem Dokument beschriebenen Lenksäulenmodul sind alle Funktionsmodule miteinander verschraubt und zwar insbesondere über Zentralschrauben, die alle anderen Funktionsmodule mit dem Lenkanlassschlossmodul verbinden. Die so miteinander verbundenen Funktionsmodule werden dann über das Lenkanlassschlossmodul an der Lenksäule fixiert.

Ein Lenksaülenmodul mit den Merkmalen des Oberbegriffs des Anspruchs 1 zeigt die US 5 747 763 A.

Nachteilig dem erstgenannten, vorbekannten Lenksäulenmodul ist, dass das Zugänglichmachen einzelner Funktionsmodule, etwa zu Reparatur- oder Wartungszwecken, recht aufwendig ist. Durch das Lösen der Zentralschrauben, die die Funktionsmodule zusammenhalten, zerfällt das Lenksäulenmodul in die einzelnen Funktionsmodule, wobei lediglich das Lenkanlassschlossmodul im Fahrzeug verbleibt, da es mit der Lenksäule fest verbunden ist. Das passgenaue Wiederzusammenfügen aller Funktionsmodule und das Verschrauben mittels der Zentralschrauben am Lenkanlassschlossmodul ist relativ umständlich und daher ebenfalls mit einem nicht unerheblichen Aufwand verbunden.

Angesichts dieses Montageaufwands erschien es wünschenswert, ein Lenksäulenmodul zu schaffen, welches mit geringerem Aufwand montierbar und, mit Ausnahme des Lenkanlassschlossmoduls, auch wieder einfach demontierbar ist. Das Lenkanlassschlossmodul soll dabei von einer einfachen Demontierbarkeit ausgenommen sein, um Manipulationsmöglichkeiten am Lenkanlassschloss und der damit zumeist kombinierten Lenksäulenverriegelung auszuschließen.

Es stellte sich daher die Aufgabe, ein Lenksäulenmodul zu schaffen, das auf einfache und kostengünstige Weise inklusive eines Lenkanlassschlossmoduls zu einer Baueinheit vormontierbar ist, und bei dem nach dem Einbau in ein Kraftfahrzeug das Lenkanlassschlossmodul praktisch nicht mehr demontierbar ist, und die übrigen Funktionsmodule mit einem besonders geringen Aufwand aus- und auch wiedereinbaubar sind.

Diese Aufgabe wird erfindungsgemäß durch ein Lenksaülenmodul mit dem Merkmalen des Anspruchs 1 gelöst, wobei das Lenkanlassschlossmodul zumindest einen Schlosskörper aufweist, der unlösbar mit der Lenksäule verbindbar ist, dass das Lenkanlassschlossmodul eine Halteplatte aufweist oder mit einer Halteplatte verbindbar ist, und dass die Halteplatte in etwa parallel zur axialen Richtung der Lenksäule verlaufende Führungsnuten eines Funktionsmoduls einschiebbar ist und nach dem Einschieben in die Führungsnuten durch eine lösbare Verbindung sicherbar ist.

Diese lösbare Verbindung kann besonders vorteilhaft als eine einfache Schraubverbindung ausgeführt sein.
Die Halteplatte stellt hierbei die Verbindung zwischen dem Lenkanlassschlossmodul und den anderen Funktionsmodulen her, und ermöglicht nach dem Entfernen der diese Verbindung sichernden Schraube ein einfaches Trennen der anderen Funktionsmodule vom Lenkanlassschlossmodul. Ebenso ist ein Wiederzusammenfügen der anderen Funktionsmodule mit dem Lenkanlassschlossmodul mit nur geringem Montageaufwand möglich.

Weitere vorteilhafte Ausgestaltungen und Weiterbildungen des erfindungsgemäßen Lenksäulenmoduls ergeben sich aus den abhängigen Ansprüchen und der nachfolgenden Beschreibung eines Ausführungsbeispiels, das in der Zeichnung dargestellt ist. Es zeigen
- Figur 1: eine Explosionsdarstellung eines Lenksäulenmoduls,
- Figur 2: das Lenksäulenmodul mit verbundenem Lenkwinkelsensormodul und Lenkstockschaltermodul,
- Figur 3: das Lenkstockschaltermodul und das Lenkanlassschlossmodul,
- Figur 4: das Lenkstockschaltermodul mit einer Halteplatte,
- Figur 5: eine Ausschnittvergrößerung der Figur 4.

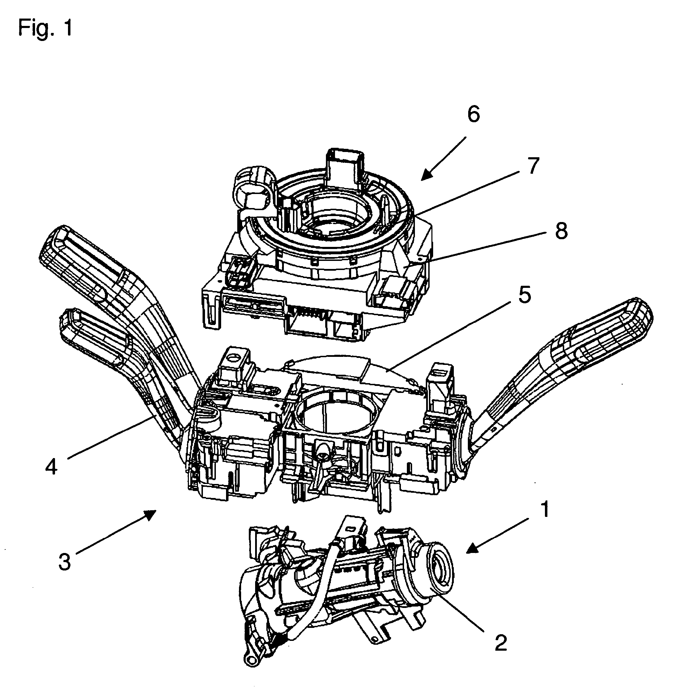

Die Figur 1 zeigt die Funktionsmodule eines Lenksäulenmoduls, wie es in modernen Kraftfahrzeugen verwendet werden kann. Durch die zusammenfügbaren Funktionsmodule vereinigt das Lenksäulenmodul eine Vielzahl elektrischer und elektronischer Komponenten, die im Bereich des Lenkrads angeordnet sind. Zu den Funktionsmodulen gehört ein Lenkstockschaitermödut (3), welches mehrere Lenkstockschalter (4) beweglich lagert.

Vorgesehen ist weiterhin ein Lenkwinkelsensormodul (6), welches eine elektronische Lenkwinkelerfassung ermöglicht. In einem Sensorgehäuse (8) ist hierzu ein Sensor zur Erfassung der Winkelstellung des Lenkrads angeordnet, sowie eine Elektronik, welche die Signale des Sensors auswertet. Die Anbindung beweglicher elektrischer Komponenten erfolgt dabei über eine spiralförmig angeordnete flexible Leiterbahn, die in einem geeigneten Gehäuse, der sogenannten Wickelfederkassette (7) untergebracht ist. Das Sensorgehäuse (8) bildet damit zusammen mit der Wickelfederkassette (7) das Lenkwinkelsensormodul (6) als eine vormontierbare Baueinheit aus.

Als weiteres Funktionsmodul des Lenksäulenmoduls ist ein Lenkanlassschlossmodul (1) vorgesehen, welches neben der Anlassfunktion für den Kraftfahrzeugmotor eine Verriegelung der Lenksäule gegen eine unbefugte Benutzung des Kraftfahrzeugs ermöglicht. Da das Lenkanlassschlossmodul (1) somit eine sicherheitskritische Komponente ist, ergibt sich die Anforderung, dass ein in ein Kraftfahrzeug eingebautes Lenkanlassschlossmodul (1) nicht ohne weiteres aus dem Kraftfahrzeug entfernbar sein darf. Andererseits sollen die anderen Funktionsmodule (3, 6) des Lenksäulenmoduls für eventuell erforderliche Wartungs- oder Reparaturarbeiten möglichst leicht zugänglich und demontierbar sein.

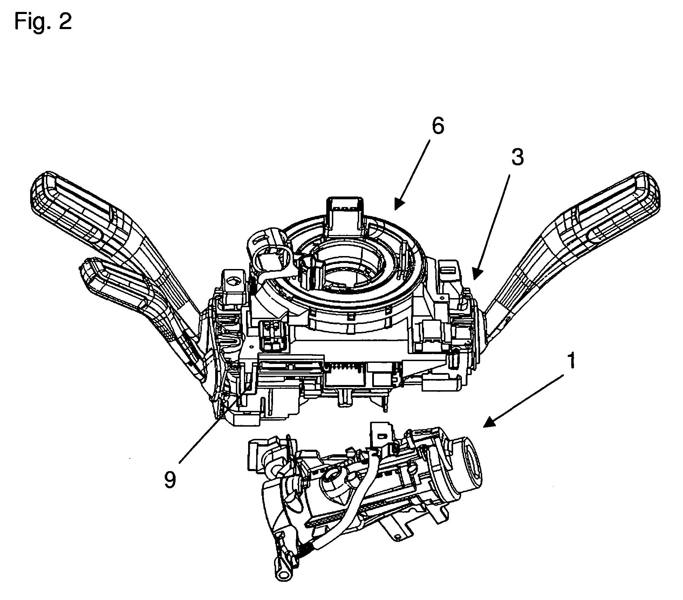

Die Funktionsmodule (1, 3, 6) sind derart ausgestaltet, dass sie gegenseitig durch einfache Rastverbindungen zusammenfügbar sind. Die Figur 2 zeigt oberhalb des Lenkanlasschlossmoduls (1) das Lenkwinkelsensormodul (6) und das Lenkstockschaltermodul (3), die über Rastverbindungen miteinander verbunden sind. Eine dieser Rastverbindungen (9) ist in der Figur erkennbar.

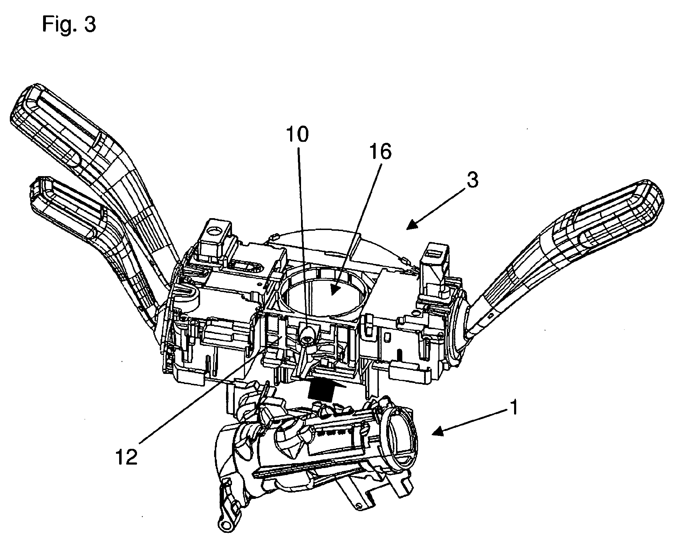

In der Figur 3 ist das Lenkstockschaltermodul (3) zur deutlicheren Darstellung ohne ein angefügtes Lenkwinkelsensormodul dargestellt. Wie der eingezeichnete Pfeil andeutet, kann das Lenkanlassschlossmodul (1) seitlich an das Lenkstockschaltermodul (3) angefügt werden. Die Fügerichtung ist dabei in etwa radialer Richtung zu einer kreisförmigen Aufnahmeöffnung (16) für eine, in der Zeichnung nicht dargestellten, Lenksäule.
Beim Anfügen verrasten Rastelemente am Lenkanlassschlossmodul (1) mit entsprechend geformten Rastelementen und Führungsgeometrien an einer Halteplatte (12), die mit dem Lenkstockschaltermodul (3) verbunden ist.

Es ist erforderlich, dass diese Rastverbindung mechanisch stabil ausgeführt ist, da die Befestigung des gesamten Lenksäulenmoduls an der Lenksäule allein durch das Lenkanlassschlossmodul (1) erfolgt, so dass dieser Rastverbindung eine tragende Funktion zukommt.

Die Montage des Lenksäulenmoduls im Kraftfahrzeugs erfolgt durch das Einsetzen des, hier nicht dargestellten freien Lenksäulenendabschnitts in die Aufnahmeöffnung (16) des Lenksäulenmoduls und dem anschließenden Aufschieben des Lenksäulenmoduls auf das Mantelrohr der Lenksäule. Abschließend wird der zum Lenkanlassschlossmodul (1) gehörende Schlosskörper (2) mit dem Mantelrohr mittels sogenannter Abreißschrauben verbunden, die nach dem Anziehen an einer Sollbruchstelle abreißen, wodurch der Schlosskörper (2), jedenfalls ohne Spezialwerkzeug, nicht mehr von dem Mantelrohr lösbar ist.

Da zusammen mit dem Schlosskörper (2) das gesamte Lenkanlassschlossmodul (1) fest mit dem Mantelrohr der Lenksäule verbunden ist und das Lenkanlassschlossmodul (1) zudem das gesamte Lenksäulenmodul trägt, ergibt sich eine Schwierigkeit, wenn die mit dem Lenkanlassschlossmodul (1) verbundenen Funktionsmodule (3, 6) von der Lenksäule gelöst werden müssen, um sie beispielsweise auszutauschen oder zu warten.

Da die Lenksäule bzw. das Lenksäulenmantelrohr durch die weiteren Funktionsmodule (3, 6) hindurchgeführt ist, können die Funktionsmodule (3, 6) nur in axialer Richtung von der Lenksäule entfernt werden. Dies wird aber durch die im wesentlichen radial zur Lenksäule wirkende Rastverbindung zwischen dem Lenkanlassschlossmodul (1) und dem Lenkstockschaltermodul (3) verhindert, da eine Rastverbindung im allgemeinen nicht senkrecht zur Verrastungsrichtung trennbar ist.

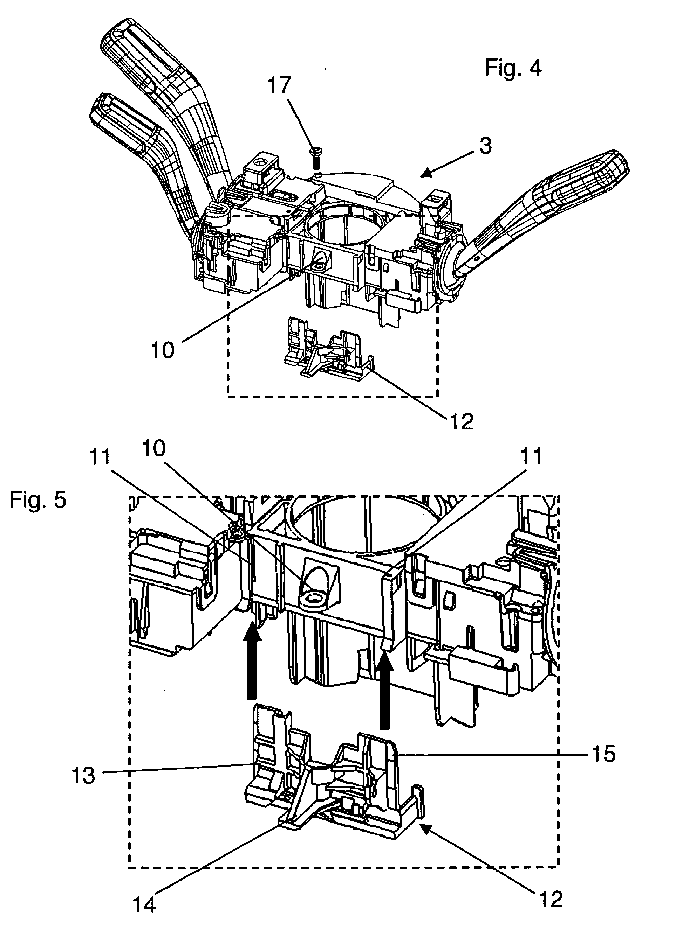

Wie aus der Figur 4 und der zugehörigen, in der Figur 5 dargestellten Ausschnittsvergrößerung ersichtlich ist, besteht die Lösung dieses Problems darin, dass die Rastverbindung zwischen dem Lenkanlassschlossmodul (1) und Lenkstockschaltermodul (3) über eine Halteplatte (12) vermittelt ist, die über einen Einschub mit dem Lenkstockschaltermodul (3) verbunden ist.

Der Einschub ist durch zwei am Lenkstockschaltermodul (3) angeformte Führungsnuten (11) gebildet, in die Randabschnitte (15) der Halteplatte (12) einschiebbar sind. Die Einschubrichtung verläuft dabei im wesentlichen parallel zur Achsenrichtung der Lenksäule. Die Halteplatte (12) ist durch eine Schraube (17) gesichert, die durch eine am Lenkstockschaltermodul (3) angeformte Schraublasche (10) hindurchgeführt ist. Die Halteplatte kann auch durch eine andere lösbare Verbindung (z. B. eine Schnappverbindung) am Lenkstockschaltermodul befestigt sein. An der Halteplatte (12) angeformte Rippen (13) versteifen die Halteplatte (12) und sorgen damit für zusätzliche Stabilität. Darüber hinaus ist an der Halteplatte (12) eine stegförmige Anformung (14) vorgesehen, durch die die Halteplatte (12) das Lenkanlassschlossmodul (1) abstützt.

Bei dem im Kraftfahrzeug montierten Lenksäulenmodul kann nach Lösen der Schraubverbindung zwischen der Halteplatte (12) und dem Lenkstockschaltermodul (3), letzteres einfach in axialer Richtung von der Lenksäule abgenommen werden. Die Halteplatte (12) bleibt dabei mit dem Lenkanlassschlossmodul (1) verrastet. Ebenso leicht erfolgt der Wiedereinbau des Lenksäulenmoduls, in dem das Lenkstockschaltermodul (3) auf die Halteplatte (12) aufgeschoben und durch Wiedereinschrauben der Schraube (17) in die Halteplatte (12) gesichert wird.
Ist mit dem Lenkstockschaltermodul (3) ein weiteres Funktionsmodul verbunden, etwa ein Lenkwinkelsensormodul (6) wie in der Figur 2 dargestellt, kann vorteilhafterweise auch vorgesehen sein, dass die Durchgangsöffnung der Schraublasche (10) zwischen der Halteplatte (12) und dem Lenkstockschaltermodul (3), anders als in den Figuren 4 und 5 dargestellt, radial zur Lenksäulenachse ausgerichtet ist.

Hierdurch können nach Lösen der Schraube (17) das Lenkstockschaltermodul (3) und das Lenkwinkelsensormodul (6) gemeinsam von der Halteplatte (12) abgenommen werden, ohne dass vorher die Rastverbindung (9) zwischen diesen Funktionsmodulen (3, 6) gelöst werden müsste. Entsprechend können die beiden Funktionsmodule (3, 6) im verbundenen Zustand wiedermontiert werden.

Der Aufwand zum Montieren, Demontierten und Wiedermontieren des Lenksäulenmoduls ist somit sehr gering, wobei sichergestellt ist, dass das Lenkanlassschlossmodul zwar gemeinsam mit den anderen Funktionsmodulen in das Kraftfahrzeug eingebaut werden kann, aber nach erfolgten Einbau praktisch nicht mehr demontierbar ist.

Selbstverständlich sind zu dieser hier beispielhaft beschriebenen Anordnung und Auswahl von Funktionsmodulen verschiedene Varianten vorstellbar, ohne dass das Gebiet der Erfindung verlassen wird. So können insbesondere weitere Funktionsmodule als miteinander verrastbare Komponenten eines Lenksäulenmoduls vorgesehen sein. Auch kann in einer kinematischen Umkehrung des hier gezeigten Ausführungsbeispiels, die Halteplatte an dem Lenkstockschaltermodul und ein zugehöriger Einschub am Lenkanlassschlossmodul angeordnet sein.

### Bezugszeichen

- 1: Lenkanlassschlossmodul
- 2: Schlosskörper
- 3: Lenkstockschaltermodul
- 4: Lenkstockschalter
- 5: Lenkstockschaltermodulgehäuse
- 6: Lenkwinkelsensormodul
- 7: Wickelfederkassette
- 8: Sensorgehäuse
- 9: Rastverbindung
- 10: Schraublasche
- 11: Führungsnuten
- 12: Halteplatte
- 13: Rippen
- 14: stegförmige Anformungen
- 15: Randabschnitte
- 16: Aufnahmeöffnung
- 17: Schraube

## Patentansprüche

1. Lenksäulenmodul für ein Kraftfahrzeug,
bestehend aus miteinander verbundenen Funktionsmodulen,
zu denen zumindest ein Lenkstockschaltermodul und ein Lenkanlassschlossmodul gehören,
wobei das Lenksäulenmodul über das Lenkanlassschlossmodul am Mantelrohr der Lenksäule befestigbar ist, wobei
das Lenkanlassschlossmodul (1) zumindest einen Schlosskörper (2) aufweist, der unlösbar mit der Lenksäule verbindbar ist,
dass das Lenkanlassschlossmodul (1) eine Halteplatte (12) aufweist oder mit einer Halteplatte (12) verbindbar ist, und
dass die Halteplatte (12) in etwa parallel zur axialen Richtung der Lenksäule verlaufende Führungsnuten (11) eines Funktionsmoduls einschiebbar ist und nach dem Einschieben in die Führungsnuten (11) durch eine lösbare Verbindung sicherbar ist, **dadurch gekennzeichnet, dass** die Halteplatte (12) eine stegförmige Anformung (14) aufweist, durch die din Halteplatte (12) das Lenkanlasssschlossmodul (1) abstützt.

2. Lenksäulenmodul nach Anspruch 1, **dadurch gekennzeichnet, dass** die lösbare Verbindung eine Schraubverbindung ist.

3. Lenksäulenmodul nach Anspruch 1, **dadurch gekennzeichnet, dass** ein Funktionsmodul als ein Lenkwinkelsensormodul (6) ausgebildet st.

4. Lenksäulenmodul nach Anspruch 3, **dadurch gekennzeichnet, dass** das Lenkwinkelsensormodul (6) eine Wickelfederkassette (7) mit einem Flachkabel aufweist.

5. Lenksäulenmodul nach Anspruch 1, **dadurch gekennzeichnet, dass** der Schlosskörper (2) des Lenkanlassschlossmoduls (1) über eine nicht lösbare Verbindung am Lenksäulenmodul befestigbar ist.

6. Lenksäulenmodul nach Anspruch 5, **dadurch gekennzeichnet, dass** die nicht lösbare Verbindung durch Abreißschrauben hergestellt ist.

7. Lenksäulenmodul nach Anspruch 1, **dadurch gekennzeichnet, dass** die Halteplatte (12) an einer Anlagefläche eines Funktionsmoduls anliegt.

8. Lenksäulenmodul nach Anspruch 1, **dadurch gekennzeichnet, dass** die Halteplatte (12) über Rastverbindungen mit dem Schlosskörper (2) verbunden ist.

9. Lenksäulenmodul nach Anspruch 1, **dadurch gekennzeichnet, dass** der Schlosskörper (2) Anformungen aufweist, die im montierten Zustand das Lenkanlassschlossmodul (1) abstützen.

## Claims

1. Steering column module for a motor vehicle,
comprising interconnected functional modules
including at least one steering column switch module and a combined ignition and steering lock module,
the steering column module being attachable to the column jacket by way of the combined ignition and steering lock module,
with the combined ignition and steering lock module (1) having at least one lock body (2) which can be undetachably connected to the steering column,
that the combined ignition and steering lock module (1) has a retainer plate (12) or can be attached to a retainer plate (12), and
that the retainer plate (12) is insertable in guideways (11) of a functional module which extend approximately parallel to the axial direction of the steering column and which can be secured by a detachable connection following insertion into the guideways (11),
**characterised in that** the retainer plate (12) has a web-shaped moulded-on part (14) by means of which the retainer plate (12) supports the combined ignition and steering lock module (1).

2. Steering column module according to Claim 1, **characterised in that** the detachable connection is a screw connection.

3. Steering column module according to Claim 1, **characterised in that** a functional module is designed as a steering angle sensor module (6).

4. Steering column module according to Claim 3, **characterised in that** the steering angle sensor module (6) has a coil spring cartridge (7) with a ribbon cable.

5. Steering column module according to Claim 1, **characterised in that** the lock body (2) of the combined ignition and steering lock module (1) can be secured to the steering column module by way of a non-detachable connection.

6. Steering column module according to Claim 5, **characterised in that** the non-detachable connection is established by shear-off screws.

7. Steering column module according to Claim 1, **characterised in that** the retaining plate (12) fits closely on a contact surface of a functional module.

8. Steering column module according to Claim 1, **characterised in that** the retaining plate (12) is connected to the lock body (2) by way of snap-in connections.

9. Steering column module according to Claim 1, **characterised in that** the lock body (2) shows moulded-on parts that support the combined ignition and steering lock module (1) in the assembled state.

## Revendications

1. Module de colonne de direction pour véhicule automobile,
qui consiste en modules fonctionnels, reliés les uns aux autres,
dont au moins un module de colonne de direction et un module de verrouillage de direction,
le module de colonne de direction pouvant être fixé au tube d'habillage de la colonne de direction, par l'intermédiaire du module de verrouillage de direction,
sachant que le module de verrouillage de direction (1) présente au moins un corps de verrouillage (2), qui peut être relié de manière inamovible à la colonne de direction,
que le module de verrouillage de direction (1) présente une plaque de maintien (12) ou peut être relié à une plaque de maintien (12) et
que ladite plaque de maintien (12) peut être glissée dans des rainures de guidage (11) d'un module fonctionnel, qui s'étendent à peut près parallèlement à la direction axiale de la colonne de direction, et, après avoir été glissée dans les rainures de guidage (11), peut être fixée de manière fiable au moyen d'une liaison amovible,
**caractérisé en ce que**
la plaque de maintien (12) présente une portion façonnée (14) en forme de patte, à l'aide de laquelle la plaque de maintien (12) soutient le module de verrouillage de direction (1).

2. Module de colonne de direction selon la revendication 1, **caractérisé en ce que** la liaison inamovible est une liaison par vis.

3. Module de colonne de direction selon la revendication 1, **caractérisé en ce qu'**un module fonctionnel est réalisé sous la forme d'un module de détection de l'angle de direction (6).

4. Module de colonne de direction selon la revendication 3, **caractérisé en ce que** le module de détection de l'angle de direction (6) présente une cassette à ressort spiral (7) avec un câble plat.

5. Module de colonne de direction selon la revendication 1, **caractérisé en ce que** le corps de verrouillage (2) du module de verrouillage de direction (1) peut être fixé au module de colonne de direction au moyen d'une liaison inamovible.

6. Module de colonne de direction selon la revendication 5, **caractérisé en ce que** la liaison inamovible est réalisée avec des vis de rupture.

7. Module de colonne de direction selon la revendication 1, **caractérisé en ce que** la plaque de maintien (12) porte contre une surface d'appui d'un module fonctionnel.

8. Module de colonne de direction selon la revendication 1, **caractérisé en ce que** la plaque de maintien (12) est reliée au cops de verrouillage (2) au moyen de liaison d'encliquetage.

9. Module de colonne de direction selon la revendication 1, **caractérisé en ce que** le corps de verrouillage (2) présente des portions façonnées, qui soutiennent le module de verrouillage de direction (1), après le montage.
